# EUROPÄISCHE PATENTANMELDUNG

(11) **EP 4 044 084 A1**
(43) Veröffentlichungstag der Anmeldung: **17.08.2022**
(21) Anmeldenummer: 21157136.9
(22) Anmeldetag: 15.02.2021
(51) Int. Cl.: G06Q 10/08, G06Q 50/28

(54) **LOGISTIKSYSTEM ZUR PLANUNG UND ABWICKLUNG VON WARENSENDUNGEN UND VERFAHREN ZUR LOGISTISCHEN BEWEGUNG VON WARENSENDUNGEN**

(71) Anmelder: Zeitfracht GmbH & Co. KG, 13627 Berlin (DE)
(72) Erfinder: Hansen, Lucas Lasse, 10437 Berlin (DE); Haylock, Tom, 12161 Berlin (DE); Böhme, Robert, 12681 Berlin (DE); Chardon, Adrien, 10409 Berlin (DE); Richter, Mirco, 12623 Berlin (DE)
(74) Vertreter: btb IP Bungartz Baltzer Partnerschaft mbB Patentanwälte

(57) **Zusammenfassung**

Die Erfindung betrifft Logistiksystem für Warensendungen (2) mit wenigstens einem Warentransportmittel (1) zum Transportieren von Warensendungen (2) in zumindest einem Transportraum, einem Planungs-und Verfolgungssystem, das als Leitzentrale einen Server (9) oder einen Verbund von miteinander kommunizierenden Computern und zugeordnete Clients (10) umfasst, die Daten der bewegten oder gelagerten Warensendungen (2) zu ermitteln vermögen und die Daten der Leitzentrale aktiv oder passiv zur Verfügung stellen.

Die bekannten Logistiksystem zur Planung und Abwicklung von Warensendungen haben den Nachteil, dass die freien Transportkapazitäten oft ungenutzt bleiben. Die verbessert die Erfindung dadurch, dass dadurch gekennzeichnet, dass die Clients (10) des nach dem Beladen des Transportraums noch zur Aufnahme weiterer Warensendungen (2) zur Verfügung stehenden Raum ermitteln vermögen und dies der Leitzentrale mitgeteilt wird, die einen Datenspeicher für weiteren abzuwickelnden Verkehr von Warensendungen (2) und eine Software zur Planung der Bewegungen der Warentransportmittel (1) umfasst, wobei die Warensendungen (2) durch eine Software in Abhängigkeit des zur Verfügung stehenden Raums und der geplanten Fahrtroute selbständig geplant werden.

## Beschreibung

Die Erfindung betrifft ein Logistiksystem zur Planung und Abwicklung von Warensendungen und ein Verfahren zur logistischen Bewegung von Warensendungen.

Das gattungsgemäße Logistiksystem zur Planung und Abwicklung von Warensendungen wird zum optimierten Transport von Warensendungen, insbesondere von in Kartons oder sonstigen transportablen Behältern versandten Warensendungen, genutzt. Teil des Logistiksystems ist wenigstens ein Warentransportmittel zum Transportieren eines, in der Regel aber einer Mehrzahl von Warensendungen in zumindest einem Transportraum. Dies kann zum Beispiel, ohne dass die Anwendung der Erfindung darauf beschränkt sein soll, ein Container oder ein Lastkraftwagen sein. Über ein oder mehrere, miteinander vernetzte und zusammenarbeitende, rechnergestützte Planungs- und optional auch Verfolgungssysteme wird das Logistiksystem im Detail abgewickelt. Dieses Planungs- und Verfolgungssystem weist als Leitzentrale einen Server oder auch einen Verbund von zwei oder mehr, miteinander in Datenkommunikation stehenden Computern auf, wobei weitere, mit der Leitzentrale kontinuierlich oder diskontinuierlich über Telekommunikationsmittel und -kanäle kommunizierende lokale Datenverarbeitungsgeräte (nachfolgend Clients genannt) jeder Art vorhanden sind. Die Clients sind dem Warentransportmittel und bzw. oder einzelnen Logistikbereichen, die insbesondere mit dem Warentransportmittel in dauerhafter oder auch nur vorübergehender Kommunikationsverbindung stehen, zugeordnet.

Die Clients sind technisch in der Lage, Daten bezüglich der im Rahmen des Logistiksystems bewegten und/oder gelagerten Warensendungen zu ermitteln, wobei diese Daten Zustandsdaten und Umgebungsbedingungen, Positionsdaten oder andere, in Verbindung mit den Warensendungen und ihren Umgebungsbedingungen im Zusammenhang stehende Daten sein können. Diese Daten werden innerhalb des Logistiksystems der Leitzentrale zur Verfügung gestellt, wobei zur Verfügung stellen das aktive Abrufen der Daten über ein in das Netzwerk, das von dem Logistiksystem genutzt wird, eingebundenes Datenverarbeitungsgerät, zum Beispiel einen Server oder ein anderes, mit einem oder einem der Server in Verbindung stehendes Datenverarbeitungsgerät, bedeuten kann. Der Server muss dabei auch nicht ein zentraler Server eines streng hierarchisch aufgebauten Netzwerkes sein, mit Server ist im erfindungsgemäßen Zusammenhang ein Rechner gemeint, der in das Kommunikationsnetzwerk eingebunden ist und wesentliche Softwarebestandteile des Logistiksystems aufweist. Alternativ oder zusätzlich zur aktiven Kommunikation in Rahmen eines "Pull-Betriebs", also dem Abrufen der Daten durch einen Server, kann auch eine Push-Funktion eingesetzt werden, also das aktive Senden der Daten durch lokale, an der Position der Warensendung oder in der unmittelbaren Nähe befindliche Geräte.

Das zugehörige Verfahren zur logistischen Bewegung von Warensendungen ist dazu eingerichtet, das Logistiksystem praktisch umzusetzen. Es weist hierzu die notwendigen Verfahrensschritte auf: Es werden üblicherweise eine Mehrzahl von Warensendungen in einem zur Aufnahme von Warensendungen vorgesehenen Transportraum eines Warentransportmittels Warensendungen von einer ersten Position, insbesondere einem Warenaufnahmeort zu einer anderen Position, insbesondere einem Warenabladeort transportiert. Ein Einladen bzw. ein Um- oder Ausladen sind zwar üblicherweise gegeben, aber zum Umsetzen der Erfindung nicht notwendig. Das Verfahren kann auch ohne Ausladen der Warensendung während einer Teilstrecke des bewegten Warentransportmittels eingesetzt werden. Als Transportraum wird meist ein Laderaum eines Lastkraftwagens (zur Aufnahme verpackter Ware oder als Tank oder Wanne auch zur Aufnahme von flüssiger Ware oder Schüttgut), ein Container, der Laderaum eines Flugzeugs oder eines Schiffes oder eine anderer Transportraum verwendet.

Solche Verfahren sind allgemein in der Logistikbranche bekannt. Die bekannten Logistiksystem haben den Nachteil, dass die Wirtschaftlichkeit des Warentransportes erhöht werden könnte. Insbesondere steht ein Nachteil darin, dass zu häufig Ladevolumen nicht oder nicht effektiv genug genutzt wird.

Aufgabe der Erfindung ist es daher, ein Logistiksystem zur Planung und Abwicklung von Warensendungen zu schaffen, bei dem die Nutzung des freien Ladevolumens optimiert ist.

Diese Aufgabe wird nach der Erfindung durch ein Logistiksystem nach Anspruch 1 sowie ein logistisches Verfahren nach Anspruch 15 gelöst.

Die Position bzw. der Transportweg einer Warensendung wird bei den bekannten Logistikverfahren bevorzugt über ein Trackingsystem verfolgt. Dies wird auch beim erfindungsgemäßen System der Fall sein, ist aber nicht notwendiger Bestandteil der Erfindung. Hierzu werden, wie oben bereits beschrieben, über Push- oder Pull-Betrieb die Daten zwischen einem warensendungsnahen Datenverarbeitungsgerät und einem Netzwerk mit einem Server oder Clients des Netzwerkes ausgetauscht, was kontinuierlich oder zeitdiskret erfolgen kann.

Durch das erfindungsgemäße Logistiksystem werden nun über Clients und eine mit den Clients zusammenarbeitende Sensorik die Belegung und die Auslastung der Transporträume und des freien Raumes eines speziellen Transportraums, der nach dem Beladen noch zur Aufnahme weiterer Warensendungen zur Verfügung steht, ermittelt. Diese Information wird der Leitzentrale zur Verfügung gestellt, wobei dies, wie oben beschrieben, weiterhin über die aktive oder passive (Push- oder Pull-Kommunikation) erfolgen kann. Wichtig ist dabei, dass die Information der Leitzentrale zu bestimmten Zeiten zur Verfügung steht. Es ist daher nicht unbedingt notwendig, dass die Information in Echtzeit und ununterbrochen übermittelt wird, die Übermittlung der Information zu sensiblen Zeitpunkten wesentlicher Ereignisse während des Transportes, beispielsweise bei Erreichen einer speziellen Position, zum Beispiel einem Lager, durch das Warentransportmittel kann die Kommunikation auslösen. Dies kann durch lokale Datenverarbeitungsgeräte oder auch durch die Positionsermittlung des Warentransportmittels im Rahmen eines globalen Navigationssystems, zum Beispiel eines GPS-Systems, getriggert werden.

Die Leitzentrale weist einen Datenspeicher für Details von weiterem, im Rahmen des Logistiksystems abzuwickelnden Verkehr von Warensendungen und eine Software zur Planung der Bewegungen der Warentransportmittel auf. Sie kann damit den Warenverkehr planen und optimieren. Die Details der weiteren Warensendungen können die Größe der Gebinde oder Pakete und auch die notwendige Auslieferungsroute der weiteren Warensendungen umfassen.

Die Software des Logistiksystems ist erfindungsgemäß in der Lage, den zur Verfügung stehenden freien Raum im Transportraum zu ermitteln und in Anhängigkeit der geplanten Fahrtroute des Warentransportmittels und nach Abgleich mit weiteren Transportaufgaben diesen freien Raum weiteren Warensendungen selbständig zuzuordnen und gegebenenfalls die Fahrtroute anzupassen. Hierzu werden dem Warentransportmittel dann bevorzugt Anweisungen zu Aufnahme und Auslieferung der weiteren Warensendungen und zur Routenänderung zu übermittelt.

Ein Kern des erfindungsgemäßen Logistiksystems ist also die Ermittlung des freien Raums im Transportraum. Hierzu kann grundsätzlich dieser Freiraum über eine Sensorik erfasst werden, wobei die Sensorik entweder unmittelbar den freien Raum zu detektieren vermag oder die Belegung des Transportraumes durch bereits eingeladene Warensendungen ermittelt und hieraus dann den frei gebliebenen Raum errechnet.

Nachdem der freie Raum ermittelt wurde, wird diese Information der Leitzentrale zur Verfügung gestellt bzw. von dieser abgerufen. Dies erfolgt insbesondere dann, und zur Durchführung des erfindungsgemäßen Verfahrens wäre dies auch ausreichend, wenn eine neue Warensendung in den Transportraum verbracht wird. In diesem Fall kann die Sensorik ermitteln, dass sich der freie Raum im Transportraum reduziert hat und dies der Leitzentrale mitteilen. Diese berechnet dann in wirtschaftlich optimierter Hinsicht, ob es sinnvoll ist, weitere Warensendungen aufzunehmen. Dies ist natürlich für den Fall, dass die Warensendungen am gleichen Ort ein- und ausgeladen werden sollen, eine einfache Aufgabe. Interessanter ist die Problematik allerdings, wenn Warensendungen transportiert werden sollen, die an unterschiedlichen Orten ein- und ausgeladen werden. In diesem Fall hängt die optimale Route des Warentransportmittels von diversen Faktoren ab.

So kann zum Beispiel bei Anwendung der Erfindung dem Weg der Warensendungen ein bestimmter Kostenfaktor zugeordnet werden. Diese hängt zum Beispiel von dem Umweg ab, den das Warentransportmittel in Kauf nehmen muss, um an einer anderen Position weitere Warensendungen aufzunehmen. Gleiches gilt natürlich für den Zielort. Im Rahmen einer Optimierungskalkulation kann also die Leitzentrale bevorzugt errechnen, um welchen Betrag sich die Kosten für die Auslieferung der Warensendungen durch die Aufnahme einer neuen Warensendung erhöhen. Insbesondere dann, wenn eine Vielzahl von Warentransportmitteln innerhalb des Logistiksystems betreut werden, kann für unterschiedliche Warentransportmittel dann eine Vergleichsrechnung durchgeführt werden, sodass das Logistiksystem anhand der Routenplanung der Warentransportmitteln und der sich durch die Umwege erhöhen und Kosten das optimale Warentransportmittel auswählen kann, dass mit den geringsten Kosten die zusätzliche Warensendung aufnehmen und ausliefern kann. Hierzu ist die Information, ob genügend freie Raum im Transportraum zur Verfügung steht, eine erste Bedingung, die die Routenplanung erfüllen muss.

Für eine solche Vergleichsrechnung können die Kilometerkosten ermittelt werden, die anfallen, wenn eine Warensendung von einem Ort zu einem anderen Ort transportiert wird. Wird die Route geändert, erhöhen sich natürlich diese Kosten durch den zusätzlichen Fahrweg, wobei das Logistiksystem diese Kostenerhöhung mit den Transportkosten für den Transport einer weiteren Warensendung und ggfs. mit den Zusatzkosten, die durch Beiladung zu einer anderen Transportaufgabe anfallen würden, vergleicht, Optionen, bei denen fest vorgegebene Bedingungen, insbesondere bezüglich der Warenankunftszeit, nach Routenplanung nicht eingehalten werden können, verwirft und aus den verbleibenden Optionen die kostengünstige Variante auswählt und selbsttätig oder nach Kontrolle durch einen Planungsmitarbeiter die Be- und Entladungsanweisungen sowie die Routenplanung ändert und dem Warentransportmittel übermittelt.

Als weitere Bedingungen für die Routenplanung können neben den oben genannten festgelegten Ankunftszeiten auch die aktuelle Verkehrslage und Tageszeiten berücksichtigt werden, um den Transport wirtschaftlich zu optimieren, wobei Tageszeiten zum einen Einfluss auf die Fahrzeit und zum anderen auf die Transportkosten haben können. So kann es wirtschaftlich sinnvoller sein, zum Beispiel zu kühlende Ware während der kühleren Nachtstunden zu transportieren, während dies bei den anderen Waren eher nicht bedeutend ist.

Die Leitzentrale erfasst also die Fahrtrouten der ihm zugeordneten Warentransportmittel, die einzuhaltenden Bedingungen für den Warentransport und berechnet wirtschaftlich optimiert hieraus die Fahrtrouten der einzelnen Warentransportmittel unter Einplanung von Aufnahmeorten und Zielorten. Auch ein Umladen in andere Warentransportmittel oder vorübergehendes Einlagern der Warensendungen kann berücksichtigt werden, hierzu sind dann dem Logistiksystem Zwischenlagerbereiche zugeordnet. Auch hier kann die Größe der Warensendungen, die dem Logistiksystem spätestens durch Betrachtung des freien Raums im Transportraum und Berechnung dessen Verringerung nach Einlagern der Warensendung bekannt ist, Berücksichtigung finden, so dass zum Beispiel ein Umladen nur dort eingeplant wird, wo es aufgrund personeller und maschineller Ressourcen problemlos möglich ist. So kann ein Umladen kleinerer Sendungen problemlos zum Beispiel durch die Fahrer eines Lastkraftwagens selbst erfolgen, während größere Sendungen logistische Vorrichtungen eines Zwischenlagers erfordern können.

Die einzelnen Komponenten des Logistiksystems sind miteinander in einem Netzwerk verbunden, das unterschiedlichste Ausgestaltungen aufweisen kann. Wichtig ist, dass vor Ort am Warentransportmittel eine Sensorik vorhanden ist, die zumindest den freien Raum im Transportraum erfassen kann. Diese kann selbst als Datenverarbeitungseinheit und Datenkommunikationseinheit ausgebildet sein, so dass sie in der Lage ist, selbsttätig mit anderen Datenverarbeitungseinheiten des Logistiksystems zu kommunizieren. In diesem Fall kann zum Beispiel diese Sensorik unmittelbar im Transportraum als Detektor angeordnet sein und über eine Mobilfunk-Verbindung, gegebenenfalls mit eigener IP-Adresse zur Identifizierung durch die Leitzentrale, mit weiteren Bestandteilen des Netzwerkes kommunizieren. Natürlich kann die Kommunikation verschlüsselt werden.

Alternativ kann auch entweder am Warentransportmittel oder in der Nähe der aktuellen Position des Warentransportmittels eine Empfangseinheit vorgesehen sein, die Daten der Sensorik empfängt und an das Logistiksystem weiterleitet. Dies kann zum Beispiel der Bordrechner eines Lastkraftwagens oder eines sonstigen Warentransportmittels sein. Es kann aber auch ein Mobilfunkgerät eines Mitarbeiters oder ein Terminalgerät eines Mitarbeiters sein, das mit Clients im Bereich der aktuellen Position des Warentransportmittels in Datenkommunikation steht oder mit dem Netzwerk selbst zu kommunizieren vermag. So kann beispielsweise, wie dies von der Auslieferung von Paketsendungen bekannt ist, der Mitarbeiter, der die Warensendung dem Warentransportmittel mittelbar oder unmittelbar übergibt, ein Scangerät mit sich führen, über das er Identität und sonstige Eigenschaft des Gebindes der Warensendung oder einer Mehrzahl von Warensendungen erfassen kann. Mit einem solchen Terminalgerät kann dann auch die Sensorik im Warentransportmittel kommunizieren und dem Terminalgerät die Information über den nach dem Einladen der betroffenen Warensendungen nunmehr noch verbliebenen, freien Raum im Transportraum mitteilen. Dieses kommuniziert ja ohnehin mit Teilen des Logistiksystems, so dass die Information dann direkt mit übertragen werden kann.

Letztlich kommt es auf die Art der Datenübertragung für die Umsetzung des erfindungsgemäßen Grundgedankens nicht an. Wichtig ist nur, dass zum wesentlichen Zeitpunkt die Information der Software des Logistiksystems zur Verfügung gestellt wird, so dass diese über die Informationen verfügt, welche geplante Route das Warentransportmittel vor sich hat und wie groß der noch verbliebene freie Raum im Transportraum ist. Diese Information soll natürlich dann übermittelt werden, wenn Eingriffsnotwendigkeiten durch das Logistiksystem durch Umplanungen bestehen. Dies kann bei stehendem Fahrzeug an einer Ein- oder Ausladestation oder auch beim Losfahren des Fahrzeuges der Fall sein.

Ferner kann dem Logistiksystem auch bevorzugt eine Information über die Größe der Einzelgebinde im Transportraum zur Verfügung gestellt werden. Da bei einer reinen optischen Erkennung des freien Raumes ja durchaus die Möglichkeit besteht, dass erst durch Umräumen der einzelnen Warensendungen im Transportraum ein freier Raum geschaffen werden kann, der groß genug ist, um eine sperrige Warensendung aufzunehmen, ist es vorteilhaft, wenn das Logistiksystem diese Möglichkeit in Betracht ziehen kann.

Auch weitere Details zur Warensendung, wie beispielsweise die Belastbarkeit mit zusätzlichem Gewicht durch Aufstellen zusätzlicher Warensendungen auf eine andere Warensendung, kann dem Logistiksystem mitgeteilt werden. Hierzu wird bevorzugt die oben beschriebene Scan-Funktion eines Terminalgerätes genutzt oder es werden Daten über die einzelnen Warensendungen von vornherein im Logistiksystem gespeichert. Dieses kann dann zum einen verhindern, dass zulässige Gewichtsbelastungen überschritten werden oder dass am Auslieferungsort ein Ausladen einer Warensendung nicht möglich ist, weil dies die Möglichkeiten der lokal vorgegebenen Bedingungen überfordern würde.

So ist es ja zum Beispiel nicht möglich, dass der LKW-Fahrer ein Paket ausliefert, auf dem ein von einem Gabelstapler aufgelegtes, sehr schweres Paket aufliegt, das erst nach Abladen durch einen Gabelstapler entnehmbar ist, wenn ein solcher Gabelstapler am Zielort nicht zur Verfügung steht. Bevorzugt wird das Logistiksystem daher in solchen Fällen auch Anweisungen zum Neusortieren der im Warentransportraum befindlichen einzelnen Warensendungen selbsttätig erstellen und in die Routenplanung aufnehmen, so dass an einem Ort, an dem eine Warensendung ausgeladen werden soll, mit minimalem Aufwand die Warensendung für diesen Zweck entnehmbar ist. Auch Aspekte der Ladungssicherung werden natürlich vom Logistiksystem bevorzugt berücksichtigt.

Die Sensorik zur Erfassung des freien Raumes weist bevorzugt optische Erfassungsmittel auf. Zwar wäre es auch grundsätzlich möglich, die Größe einzelner Paketsendungen über einen Barcode oder einem ähnlichen Mittel einzulesen und dann die Belegung des Transportraumes durch Addition der Größen zu ermitteln, jedoch wurde dies der Besonderheit der Position innerhalb des Transportraumes nicht Rechnung tragen, sondern nur eine theoretische Belegung liefern. So können ja Abstände zwischen einzelnen Paketen, hochkant oder querliegende Pakete oder ähnliche Besonderheiten über die der Warensendung lagerseitig zugeordnete Größeneigenschaft nicht erfasst werden. Über optische Erfassungsmittel wird dies dagegen problemlos möglich. Dennoch kann dem Personal über das Logistiksystem, bevorzugt ausgegeben auf einem vom Personal beim Ein- oder Ausladen einsehbaren Displays, zum Beispiel eines Terminalgerätes, wie es oben beschrieben ist, eine Anweisung erteilt werden, an welcher Stelle des Transportraum eine spezielle Warensendung positioniert werden soll. Über die optischen Erfassungsmittel kann man gleichzeitig auch überprüft werden, ob der Anweisung Folge geleistet wurde und gegebenenfalls eine Korrektur verlangt werden. All dies kann von der Software selbsttätig vorgenommen werden.

Die optischen Erfassungsmittel sind bevorzugt so ausgebildet, dass sie mit minimalem Sensoraufwand den maximalen Betrachtungswinkel abdecken können. Bevorzugt wird hierzu im Transportraum eine in einem Gehäuse angeordnete Sensorik verwendet. Natürlich können auch mehrere Sensoren in mehreren Gehäusen Verwendung finden. Die Verwendung nur eines Gehäuses ist dabei aber besonders bevorzugt, da dieses natürlich den Bedarf an Datenkommunikation deutlich reduziert und jede Position eines optischen Erkennungsmittels auf ein freies Blickfeld dieses Erkennungsmittels erfordert. Auch ist eine Abstimmung der Erkennungsergebnisse der einzelnen Sensoren in unterschiedlichen Gehäusen in diesem Fall nicht notwendig.

Bei einer besonders bevorzugten Ausgestaltung der Erfindung werden unterschiedliche optische Erfassungsmittel und auch andere Sensoren in einem Gehäuse zusammengefasst. Eine besonders effektive Erfassung der Belegung des Transportraums kann über ein Lidar-System erfolgen. Ein solches Lidar-System verwendet Laserstrahlung, insbesondere in Form von kurzen Laserimpulsen, und berechnet anhand der Reflexionen und der Lichtlaufzeit Abstände zu Objekten im Warentransportraum. Diese Abstände wiederum werden genutzt, um den freien Raum zu ermitteln. Hierfür ist natürlich notwendig, dass die Warensendungen so eingeladen werden, dass keine vom System nicht mehr erkennbaren freien Räume hinter dem einzelnen Gebinde auftreten. Dies ist zwar grundsätzlich aufgrund der Transportsicherung ohnehin erforderlich, jedoch kann im Einzelfall eine solche Fehlbeladung nicht ausgeschlossen werden. In diesem Fall kann zum Beispiel zusätzlich die Größe der Warensendung und ihrer Verpackung im Logistiksystem eingespeichert sein oder über Einlesen von Informationen auf der Warensendung selbst ermittelt werden.

Das Logistiksystem oder, bei vorhandener Eigenintelligenz, auch schon die Sensorik, kann dann ermitteln, ob sich der zur Verfügung stehende Raum durch Einlagern der zusätzlichen Warensendung über die Größe der Warensendung selbst hinaus verringert hat, also ein freier Raum existiert, der vom System nicht mehr erkannt werden kann. In diesem Fall kann dem Personal signalisiert werden, dass die Einlagerung im Transportraum optimiert werden sollte. Sofern dies nicht möglich oder nicht gewünscht ist, kann das Personal den Zustand auch als "gewollt" quittieren. Über das Lidar-System kann im Sichtfeld des Empfängers der Abstand zwischen dem Sender und der einzelnen Warensendungen zuverlässig ermittelt und darüber der freie Raum im Transportraum berechnet werden.

Allerdings hat ein Lidar-System den Nachteil, dass die Reichweite üblicherweise begrenzt ist. So wird es schwer, einen Raum, der länger als 5m ist, mit einem der hier aus wirtschaftlichen Gründen bevorzugt in Betracht kommenden System zu überwachen. Eine besonders bevorzugte Ausgestaltung des erfindungsgemäßen Logistiksystems verwendet daher die Kombination einer Sensorik aus einem Lidar-System und Kameramitteln, wobei die Kameramittel den aus Sicht der Sensorik hinteren Raum, der üblicherweise, wenn die Sensorik in Fahrtrichtung des Transportraumes hinten angeordnet ist, dann der vordere Bereich des Transportraums ist, erfassen. Besonders bevorzugt kommt hier eine stereoskopische Kamera zum Einsatz. Diese erlaubt über die Auswertung unterschiedlicher Blickwinkel die Erfassung eines räumlichen Eindrucks im von der Sensorik weiter entfernt gelegenen Bereich.

Die Signale des Lidar-Systems und der stereoskopischen Kamera werden dann entweder getrennt voneinander übermittelt oder bei vorhandener Eigenlogik noch im Detektorgehäuse zu einem Gesamtsignal miteinander verrechnet. Dabei kann vorgesehen sein, dass die einzelnen Abdeckungsbereiche der Signale streng voneinander getrennt werden oder das überlappende Bereiche zugelassen werden, die dann softwareseitig ausgewertet werden.

Alternativ oder zusätzlich zum Lidar-System und/oder zur stereoskopischen Kamera können weitere Sensoren Anwendung finden. Dies können zum Beispiel Gewichtsensoren zur Ermittlung der Last an einer bestimmten Stelle des Bodens des Transportraumes sein. Solche Gewichtssensoren können zum Beispiel von piezoelektrischen Folien gebildet sein, die als Meterware preiswert über den gesamten Boden verlegt werden können und in Abhängigkeit des Druckes elektrische Signale liefern. Je nach Ausgestaltung des Transportraumes ließe sich auch, wie es von der Füllstandsermittlung eines Brennmitteltanks bekannt ist, ein Drucksensor verwenden, der die Kompressibilität der Luft im freien Raum nutzt. Dieser Sensor hätte allerdings den Nachteil, dass er auch diejenigen Bereiche als freien Raum einstufen würde, die nicht mehr zugänglich sind und dass er natürlich keine geometrische Abmessung des freien Raumes ermitteln kann. Aus diesem Grund wird ein solcher Sensor in den meisten Fällen nur als zusätzlicher Sensor Anwendung finden. Gleiches gilt für den oben genannten Drucksensor. Solche alternativen Sensoren werden allerdings nur bei speziellen Anwendungen Verwendung finden, da die oben beschriebene optische Erfassung für die meisten Warensendungen die einfachste Weise ist, den freien Raum zu bestimmen.

Da die Erfassungsmittel und deren Anordnung im Transportraum ein Grundgedanke der vorliegenden Erfindung sind, wird der Transportraum, insbesondere als Container oder Laderaum eines Lastkraftwagens, eines Eisenbahnwaggons oder eines Schiffes, aber auch ein hierzu aus Sicht der Raumüberwachung über die Erfassungsmittel äquivalenter Lagerraum eines Logistikunternehmens, als einer der eigenständigen Teile der Erfindung angesehen.

Weitere Merkmale und Vorteile der Erfindung ergeben sich aus der nachfolgenden Beschreibung bevorzugter Ausführungsbeispiele anhand der Zeichnungen.

In den Zeichnungen zeigt:
- Fig. 1: ein Diagramm mit beispielhaften Teilbereichen des Logistiksystems bzw. des zugrundeliegenden Verfahrens,
- Fig. 2: eine weitere Darstellung eines Ausführungsbeispiels eines erfindungsgemäßen Logistiksystems,
- Fig. 3: ein Ausführungsbeispiel eines Warentransportmittels eines erfindungsgemäßen Logistiksystems und
- Fig. 4: eine Sensorik mit Erfassungsmitteln zur Durchführung eines erfindungsgemäßen Logistiksystems.

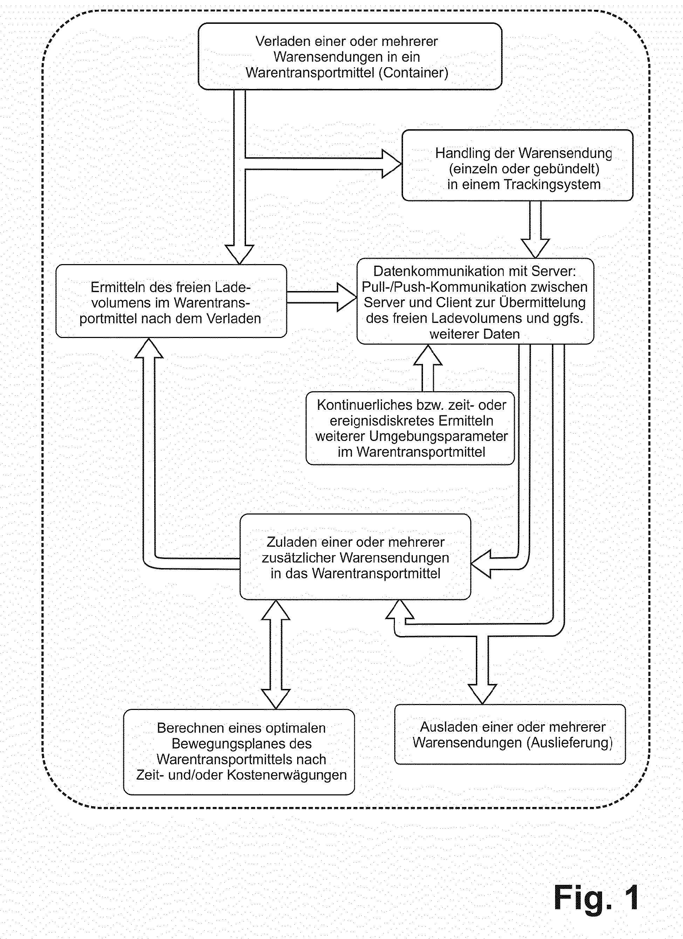

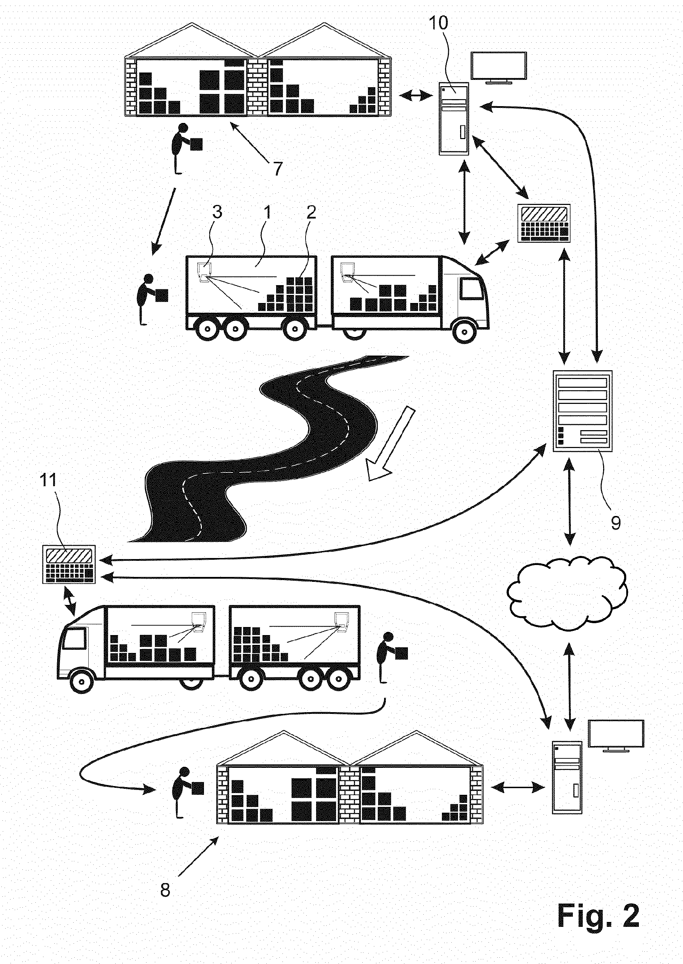

In Figur 1 sind schematisch in Form eines Blockdiagramms die wesentlichen Schritte eines erfindungsgemäßen Logistiksystems dargestellt. Figur 2 visualisiert die einzelnen Schritte des Systems. Grundsätzlich beginnt das dem System zugrunde liegende Verfahren mit dem Verladen einer Warensendung 2 in ein Warentransportmittel 1.

Beispielhaft ist hier in Figur 2 ein Lagerraum skizziert. Das Personal entnimmt aus diesem Lagerraum die Warensendung 2 und verbringt sie in einen Transportraum für den Weitertransport. Der Transportraum ist hier beispielhaft ein Container, der bereits auf einem Lastkraftwagen als Warentransportmittel 1 angeordnet ist. Vor dem Einladen, beim Einladen oder spätestens nach dem Einladen in das Warentransportmittel 1 wird die einzelne Warensendung 2 dann in ein Trackingsystem des Logistiksystems aufgenommen. Dieses Trackingsystem kann, wie aus dem Stand der Technik bekannt, auch eine Verfolgung des Weges der Warensendung 2 beinhalten, notwendig ist dies allerdings nicht unbedingt. Für das erfindungsgemäße Logistiksystem ist vielmehr die Kenntnis wichtiger, an welcher Position sich das Warentransportmittel 1 selbst befindet, um diesem gegebenenfalls weitere Transportaufgaben zuordnen zu können.

Zur Aufnahme der Warensendung 2 in das Logistiksystem erfolgt spätestens nach dem Beladen des Warentransportmittels 1 die Datenkommunikation, mit der dem Logistiksystem die Details zur Warensendung 2 mitgeteilt werden. Insbesondere enthält diese Datenkommunikation auch die Information, wie groß der nach dem Beladen des Warentransportmittels 1 verbleibende freie Raum im Transportraum noch ist. Diese Information kann natürlich erst nach endgültigem Abstellen der Warensendung 2 im Transportraum ermittelt werden. Dieser Teil der Datenkommunikation wird bevorzugt entweder manuell ausgelöst, in dem der Mitarbeiter, der die Warensendung 2 in den Transportraum verbringt, über eine elektronische Quittung das Abstellen der Warensendung 2 quittiert. Dies kann an einem Handgerät (Terminalgerät) oder auch am Warentransportmittel 1 selbst geschehen.

Zusätzlich oder bevorzugt alternativ kann aber auch über die Sensorik erfasst werden, dass eine Warensendung 2 in den Transportraum verbracht wurde und dort nunmehr nicht mehr bewegt wird. Das bei endgültigem Abstellen der Warensendung 2 auftretende Einfrieren des Bewegungsbildes kann als endgültiges Abstellen elektronisch erfasst und interpretiert werden, so dass in diesem Fall dann selbsttätig eine Berechnung des verbleibenden freien Raumes erfolgt. Dies kann dann einem anderen Datenverarbeitungsgeräte des Netzwerkes übermittelt werden. Diese Routine wiederholt sich während des Beladens des Transportraumes mit weiteren Warensendungen 2, bis der Ladevorgang abgeschlossen ist. Bei dem weiteren Beladen kann bereits durch das Logistiksystem eine optimierte Reihenfolge des Zuladens bestimmt und vorgegeben werden, um eine optimale Raumausnutzung und eine schnelle Erreichbarkeit einer Warensendung 2 bei Erreichen des Zielortes ohne störende Notwendigkeit eines Umsortierens innerhalb des Transportraumes zu ermöglichen.

In dem in Figur 2 dargestellten Beispiel ist das Warentransportmittel 1 ein Lastkraftwagen, der nach dem Beladen am Ausgangsort zu einem Zielort fährt. Dies ist natürlich nur eine vereinfachte Darstellung, in der Praxis werden mehrere Zwischenziele vorgesehen sein. Schematisch ist in Figur 2 der Weg der Datenkommunikation für mehrere, teils alternative Kommunikationswege dargestellt.

Im als Container ausgebildeten Transportraum des Warentransportmittels 1 ist hier im hinteren Bereich ein Gerät mit der Sensorik zur Ermittlung der notwendigen Daten dargestellt. Dieses Gerät weist optische Erfassungsmittel 3 auf, die den Bereich vor den Warensendungen 2 optisch erfassen (hierdurch geradlinige Striche symbolisch dargestellt). Diese Sensorik mit den optischen Erfassungsmitteln 3 überträgt die ermittelten Signale an ein datenverarbeitendes Gerät oder wertet diese Signale selbst aus und überträgt dann das Ergebnis dieser Auswertung an ein datenverarbeitendes Gerät. Dieses datenverarbeitende Gerät kann ein beliebiges Gerät sein, in Betracht kommen hier insbesondere ein Client 10 oder ein Server 9 im Bereich der aktuellen Position des Warentransportmittels 1 oder ein mobiles Datenverarbeitungsgerät 11. Ferner kann natürlich ein bordeigenes Datenverarbeitungsgerät des Warentransportmittels 1 genutzt werden. Wichtig ist lediglich die Tatsache, dass die Signale oder deren Auswertung dem Netzwerk des Logistiksystems zur weiteren Berechnung einer optimierten Beladung oder einer optimierten Fahrtroute zur Verfügung gestellt wird oder von diesem abgerufen werden kann.

Das Netzwerk des Logistiksystems kann einen zentralen Server 9 aufweisen und hierarchisch aufgebaut sein. In diesem Fall würde der zentrale Server 9 bevorzugt auch die Software aufweisen, der die notwendigen Berechnungen vornimmt. Es ist aber auch möglich, diese Aufgaben auf ein Netzwerk mit gleichrangigen Computern aufzuteilen oder die Berechnungen unmittelbar auch von den Clients 10 vornehmen zu lassen.

Bevorzugt wird nun die optimierte Route berechnet und diese Routeninformation unmittelbar dem der Redaktionssystem des Warentransportmittels 1 zugeführt. In Figur 2 ist ein Client 10 dargestellt, der sowohl mit einem lokalen Netzwerk im Bereich des Lagers (Aufnahmeort der Warensendung 2) als auch mit einem mobilen Datenverarbeitungsgerät 11 zu kommunizieren vermag. Das lokale Netzwerk kann natürlich wie auch ein einzelner Client 10 Teil des Netzwerkes des gesamten Logistiksystems sein und ist bevorzugt über das Internet in dieses Netzwerk eingebunden. Gleiches gilt für das mobile Datenverarbeitungsgerät 11 und auch für ein eventuell an Bord des Warentransportmittels 1 befindliches Datenverarbeitungsgerät, das Teil der Fahrzeugausstattung sein kann. Die verschiedenen Datenübertragungswege sind hier nur als beispielhafte Möglichkeiten anzusehen, es müssen nicht alle eingezeichneten Verbindungen bestehen. Wesentlich ist nur, dass die optischen Erfassungsmittel 3 in mittelbarer oder unmittelbarer Datenverbindung mit dem Netzwerk des Logistiksystems stehen.

Das Logistiksystem selbst wiederum steht auch in Verbindung mit weiteren Orten, hier zum Beispiel dem eingezeichneten Zielort. Auch hier sind die oben bereits beschriebenen Datenverarbeitungsgeräte, zum Beispiel ein Client 10 oder ein mobiles Datenverarbeitungsgeräte 11 vorgesehen, die die Kommunikation abwickeln. Natürlich kann über das erfindungsgemäße Sensorik-System auch der Füllstand des Lagers selbst überwacht werden, so dass Lagerkapazitäten ebenfalls über das Logistiksystem optimiert genutzt werden können. In diesem Fall ist dann eine Sensorik mit optischen Erfassungsmitteln 3 auch im Lagerraum vorgesehen, die ebenfalls über die beschriebenen Kommunikationswege mit dem Logistiksystem in Verbindung steht.

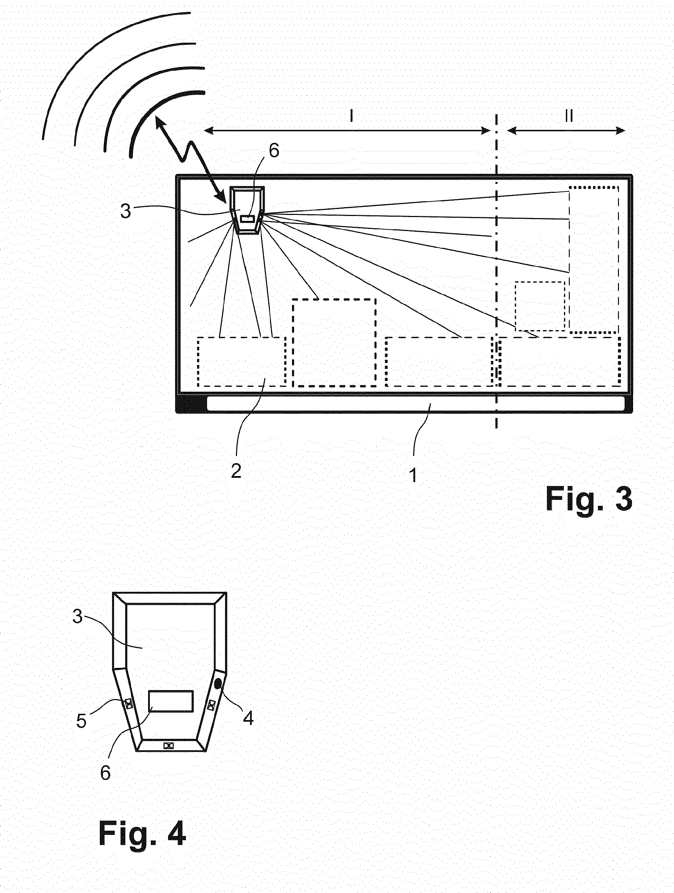

In Figur 3 ist als exemplarisches Beispiel für den Transportraum eines Warentransportmittels 1 ein Container dargestellt. Dieser Container weist (hier in vergrößerter Darstellung) im hinteren oberen Bereich eine Sensorik mit optischen Erfassungsmitteln 3 auf. Über Kommunikationsmittel 6, hier als Durchgangsfenster für Sendesignale dargestellt, kommuniziert die Sensorik drahtlos mit dem Netzwerk des Logistiksystems. Diese Kommunikation kann zum Beispiel nach dem GSM-Standard oder einem anderen Protokoll der drahtlosen Nachrichtenübertragung erfolgen. Zusätzlich oder alternativ ist es auch möglich, dass über die Bordelektronik eine unmittelbare Kommunikation, auch kabelgebunden, mit den bordeigenen Datenverarbeitungsmitteln erfolgt. Diese können dann die Signale an das Netzwerk des Logistiksystems übermitteln. Eine weitere Verbindungsmöglichkeit kann durch das Terminalgerät des Personals gegeben sein, das sich beim Beladen oder Entladen des Containers zum Beispiel über eine Bluetooth^{®}-Verbindung selbsttätig mit der Sensorik verbindet.

Innerhalb des Containers ist ein erster Ladebereich I eingezeichnet, der von einem Lidar-System 5 optisch erfasst wird. Hierzu weisen die optischen Erfassungsmittel 3 der Sensorik Sende- und Empfangsmittel für die einzelnen Lichtpulse bzw. -wellen des Lidar-Systems 5 auf. Durch eine gestrichelte Linie ist der Bereich gekennzeichnet, der von dem Lidar-System 5 systembedingt nicht mehr erfasst werden kann. Hier kommen alternativ zusätzliche optische Erfassungsmittel 3 in Form einer stereoskopischen Kamera 4 zum Einsatz. Diese deckt den zweiten Ladebereich II ab. Diese Weise kann der gesamte Ladebereich des Transportmittels über eine Sensorik, die in einem gemeinsamen Gehäuse alle optischen Erfassungsmittel 3 umfasst, abgedeckt werden.

Die Stromversorgung der Sensorik kann über bordeigene Mittel des Warentransportmittels 1 kabelgebunden erfolgen. Bevorzugt wird jedoch die Sensorik über eine eigene Spannungsversorgung verfügen, hierzu kann ein Batterie-Pack oder ein Akkumulator vorgesehen sein. Über das Logistiksystem oder die Bordelektronik kann der Ladezustand der eigenen Spannungsversorgung der Sensorik überwacht werden. Auch ein induktives Laden über von außen an den Container angesetzte Ladeteller und eine im Gehäuse angeordnete Ladespule ist möglich.

In Figur 4 ist das Gehäuse der Sensorik in einer vergrößerten Detailansicht schematisch wiedergegeben. Zu erkennen ist, dass im unteren Bereich im Bereich einer abgeschwächten Seitenwandlung drei Sichtfenster des Lidar-Systems 5 vorhanden sind. Im rechten Bereich ist dagegen das Objektiv der stereoskopischen Kamera 4 vorgesehen. Hier ist nur ein Kameramittel ausreichend, da diese ja nur den hinteren Ladebereich II erfassen muss, sodass ein Blickwinkel nach unten oder in den vorderen Bereich des Containers entbehrlich ist. Über ein weiteres Fenster können Kommunikationsmittel 6 mit dem Netzwerk des Logistiksystems kommunizieren.

Zusätzlich zu den genannten Daten über den freien Raum kann natürlich das Logistiksystem zum einen als Trackingsystem, so wie im Stand der Technik bekannt, verwendet werden. Eine weitere Anwendung, die bevorzugt umgesetzt werden kann, besteht in der Zusicherung weiterer Qualitätsmerkmale des logistischen Handlings der Warensendung 2. So können zum Beispiel in dem Gehäuse der Sensorik weitere Sensoren enthalten sein, etwa ein Temperatursensor oder ein Stoß- oder Gyrosensor. Über diese zusätzlichen Sensoren kann nicht nur der aktuelle Zustand ermittelt werden, sondern es kann auch sichergestellt werden, dass bestimmte Ereignisse nicht eingetreten sind. So kann zum Beispiel über einen Temperatursensor das Einhalten einer Kühlkette überwacht werden. Die gewonnenen Daten können in der Sensorik selbst gespeichert werden oder auch an das Logistiksystem übertragen werden.

Zur Dokumentation der fehlerfreien Logistik können entweder im Falle eines Überschreitens von Grenzwerten Alarmmeldungen ausgegeben werden oder es können auch kontinuierlich die von den zusätzlichen Sensoren erfassten Daten gespeichert werden. Dem Auftraggeber können dann Prüfprotokolle zur Verfügung gestellt werden, die die ordnungsgemäße Handhabung der Warensendungen 2 dokumentieren. Zusätzlich können die Sensoren natürlich genutzt werden, um zum Beispiel den Fahrer eines LKWs über kritische Zustände im Transportraum zu unterrichten.

Die Erfindung wurde in dieser Beschreibung anhand unterschiedlicher Kommunikationsmöglichkeiten beschrieben. Wesentlich ist die Bestimmung des freien Raums während der Bewegung des Warentransportmittels 1 und während bzw. nach dem Be- und Entladen, so dass der freie Aufnahmeraum für weitere Warensendungen 2 ermittelt und kalkulatorischen vom Logistiksystem berücksichtigt werden kann. Die beschriebenen Arten der Datenübertragung sowie der Aufbau des Netzwerkes ist im Bereich des fachmännischen Könnens veränderbar und soll nicht die Anwendung der Erfindung beschränken.

### Bezugszeichenliste:

- 1: Warentransportmittel
- 2: Warensendung
- 3: Erfassungsmittel
- 4: Stereoskopische Kamera
- 5: Lidar-System
- 6: Kommunikationsmittel
- 7: Warenaufnahmeort
- 8: Warenabladeort
- 9: Server
- 10: Client
- 11: Mobiles Datenverarbeitungsgerät

- I: Vom Lidar-System erfasster erster Ladebereich
- II: Von der stereoskopischen Kamera erfasster zweiter Ladebereich

## Patentansprüche

1. Logistiksystem zur Planung und Abwicklung von Warensendungen (2) mit
• wenigstens einem Warentransportmittel (1) zum Transportieren einer Mehrzahl von Warensendungen (2) in zumindest einem Transportraum,
• einem oder mehreren rechnergestützten Planungs- und Verfolgungssystems, das als Leitzentrale einen Server (9) oder einen Verbund von zwei oder mehr, miteinander in Kommunikation stehenden Computern und mit der Leitzentrale kontinuierlich oder diskontinuierlich über Telekommunikationsmittel und -kanäle kommunizierende, dem Warentransportmittel (1) und/oder einzelnen Logistikbereichen, die insbesondere mit dem Warentransportmittel (1) in dauerhafter oder vorübergehender Kommunikationsverbindung stehen, zugeordnete Clients (10) umfasst,
wobei die Clients (10) Daten der im Rahmen des Logistiksystems bewegten und/oder gelagerten Warensendungen (2) zu ermitteln vermögen und die Daten der Leitzentrale zur Verfügung gestellt sind und/oder von der Leitzentrale abrufbar sind,
**dadurch gekennzeichnet, dass**
die Clients (10) über eine Sensorik die Belegung und Auslastung des Transportraums und des nach dem Beladen des Transportraums verbleibenden, noch zur Aufnahme weiterer Warensendungen (2) zur Verfügung stehenden freien Raum zu ermitteln vermögen, wobei der Leitzentrale die Information über den zur Verfügung stehenden freien Raum bereitgestellt ist und die Leitzentrale einen Datenspeicher für Details von weiterem, im Rahmen des Logistiksystems abzuwickelnden Verkehr von Warensendungen (2) und eine Software zur Planung der Bewegungen der Warentransportmittel (1) umfasst und wobei die Details der weiteren Warensendungen (2) die Größe der Gebinde oder Pakete und die Auslieferungsroute umfassen und die Software nach einem Vergleich dem zur Verfügung stehenden freien Raum in Anhängigkeit der geplanten Fahrtroute des Warentransportmittels (1) weitere Warensendungen (2) selbständig zuzuordnen und dem Warentransportmittel (1) Anweisungen zu Aufnahme und Auslieferung der weiteren Warensendungen (2) zu übermitteln vermag.

2. Logistiksystem zur Planung und Abwicklung von Warensendungen (2) nach Anspruch 1, **dadurch gekennzeichnet, dass** die Clients (10) die aktuelle Position der im Rahmen des Logistiksystems bewegten und/oder gelagerten Warensendungen (2) zu ermitteln vermögen und die ermittelte Position der Leitzentrale als Trackingdienst zur Verfügung gestellt ist und/oder die Clients (10) zusätzliche Variablen am aktuellen Ort, an dem sich die im Einflussbereich des Clients (10) deponierte Warensendung befindet, zu ermitteln vermögen.

3. Logistiksystem zur Planung und Abwicklung von Warensendungen (2) nach Anspruch 1, **dadurch gekennzeichnet, dass** der Datenspeicher für jede Warensendung (2), für die eine fest vorgegebene Ankunftszeit an einer Position, insbesondere einem Warenabladeort (8), verlangt ist, die geplante Sollankunftszeit umfasst, wobei die Software eine Optimierungsroutine umfasst, die die Fahrrouten und -zeiten des Warentransportmittels (1) zu ermitteln vermag und eine Zuladung weiterer Warensendungen (2) nur dann einplant und anweist, wenn nach Überarbeitung einer vom Warentransportmittel (1) abzufahrenden Route durch Aufnahme weiterer Warensendungen (2) für alle im Transportraum befindlichen Warensendungen (2) die hinterlegten Sollankunftszeiten eingehalten werden.

4. Logistiksystem zur Planung und Abwicklung von Warensendungen (2) nach einem der beiden vorhergehenden Ansprüche, **dadurch gekennzeichnet, dass** die Clients (10) ortsfest angeordnet sind und über Kommunikationsmittel (6), insbesondere über eine Funkverbindung oder über sonstige Telekommunikationsmittel (6), mit Erfassungsmitteln (3) zur Detektion der Position und Größe der Warensendungen (2) oder der Größe des noch nicht belegten, freien Raums innerhalb des Transportraums zu kommunizieren vermögen, wobei die Erfassungsmittel (3) im Transportraum angeordnet sind.

5. Logistiksystem zur Planung und Abwicklung von Warensendungen (2) nach einem der vorhergehenden Ansprüche, **dadurch gekennzeichnet, dass** die Clients (10) zumindest mit einer Benutzereinheit in Form eines Ein- und/oder Ausgabeterminals oder vollständig innerhalb des Transportmittels angeordnet sind und dass die Clients (10) die Erfassungsmittel (3) aufweisen und/oder mit im Transportraum angeordneten Erfassungsmitteln (3) zu kommunizieren vermögen.

6. Logistiksystem zur Planung und Abwicklung von Warensendungen (2) nach einem der vorhergehenden Ansprüche, **dadurch gekennzeichnet, dass** die Erfassungsmittel (3) optische Erfassungsmittel (3) umfassen, wobei die die Erfassungsmittel (3) und/oder die Clients (10) über eine Push-Funktion erfasste Änderungen signifikanter, von den Erfassungsmitteln (3) überwachter Daten, insbesondere der Position und Größe der in den Transportraum eingebrachten Warensendungen (2), der Leitzentrale selbstständig zur Verfügung zu stellen vermögen oder auf einem Display des Logistiksystems, insbesondere im Nahbereich des Clients (10) darzustellen vermögen.

7. Logistiksystem zur Planung und Abwicklung von Warensendungen (2) nach dem vorhergehenden Anspruch, **dadurch gekennzeichnet, dass** die optischen Erfassungsmittel (3) über eine Bilderkennung die Größe und die Position einer Warensendung (2) innerhalb des Transportraums ermitteln oder beim Einbringen einer Warensendung (2) in den Transportraum die Größe der Warensendung (2) erfassen und den Weg, den die Warensendung (2) innerhalb des Transportraums beim Einbringen zur Abstellposition aufzuzeichnen vermag, wobei über eine Software aus der Größe und dem Weg der in Anspruch genommene Raum ermittelbar ist.

8. Logistiksystem zur Planung und Abwicklung von Warensendungen (2) nach einem der beiden vorhergehenden Ansprüche, **dadurch gekennzeichnet, dass** die optischen Erfassungsmittel (3) zumindest ein Lidar-(5) System zur Ermittlung der Größe der Warensendung (2) und/oder eine stereoskopische Kamera (4) umfassen.

9. Logistiksystem zur Planung und Abwicklung von Warensendungen (2) nach dem vorhergehenden Anspruch in Verbindung mit Anspruch 9, **dadurch gekennzeichnet, dass** ein erster Ladebereich (I) des Transportraums über zumindest ein Lidar-System (5) und ein weiterer, insbesondere vom ersten Ladebereich (I) räumlich oder funktional getrennter, zweiter Ladebereich (II) des Transportraums über zumindest eine stereoskopische Kamera (4) überwacht ist.

10. Logistiksystem zur Planung und Abwicklung von Warensendungen (2) nach Anspruch 9, **dadurch gekennzeichnet, dass** in dem Transportraum zumindest ein Detektor als Erfassungsmittel (3) mit einem Gehäuse angeordnet ist, wobei das Lidar-System (5) und die stereoskopische Kamera (4) in dem Gehäuse derart angeordnet sind, dass sie durch Öffnungen in dem Gehäuse oder Sichtfenster in dem Gehäuse jeweils den ersten Ladebereich (I) des Transportraums und den zweiten Ladebereich (II) des Transportraums abzudecken vermögen.

11. Logistiksystem zur Planung und Abwicklung von Warensendungen (2) nach einem der vorhergehenden Ansprüche, **dadurch gekennzeichnet, dass** die Erfassungsmittel (3) zusätzliche Sensoren, insbesondere einen Temperatursensor, einen Giergeschwindigkeitssensor/Gyro-Sensor und/oder einen Stoßsensor, insbesondere einen piezoelektrischen Stoßsensor, einen Beschleunigungssensor und/oder einen Empfänger, insbesondere ein GNSS-Sensor, eines globalen Positionsbestimmungssystems zur Bestimmung der Position des Detektors umfassen.

12. Logistiksystem zur Planung und Abwicklung von Warensendungen (2) nach einem der vorhergehenden Ansprüche, **dadurch gekennzeichnet, dass** der Transportraum des Warentransportmittels (1) ein zur Aufnahme von Warensendungen (2) vorgesehener Innenraum eines Lastkraftwagens, eines Containers, eines Flugzeugs oder eines Schiffes ist.

13. Verfahren zur logistischen Bewegung von Warensendungen (2), mit den Verfahrensschritten:
• Transportieren einer Mehrzahl von Warensendungen (2) in einem zur Aufnahme von Warensendungen (2) vorgesehenen Transportraum eines Warentransportmittels (1) in Form eines Lastkraftwagens, eines Containers, eines Flugzeugs oder eines Schiffes von einer ersten Position, insbesondere einem Warenaufnahmeort (7) zu einer anderen Position, insbesondere einem Warenabladeort (8),
• Verfolgen der Position einem jeder Warensendungen (2) über ein rechnergestütztes Planungs- und Verfolgungssystem, das als Leitzentrale einen Server (9) oder einen Verbund von zwei oder mehr, miteinander in Kommunikation stehenden Servern (9) und/oder Arbeitsplatzcomputern und mit der Leitzentrale kontinuierlich oder diskontinuierlich über Telekommunikationsmittel und -kanäle kommunizierende, dem Warentransportmittel (1) und/oder einzelnen Logistikbereichen, die insbesondere mit dem Warentransportmittel (1) in dauerhafter oder vorübergehender Kommunikationsverbindung stehen, zugeordnete Clients (10) umfasst,
• kontinuierliches oder zeit- oder ereignisdiskretes Ermitteln der Position der im Rahmen des Logistiksystems bewegten und/oder gelagerten Warensendungen (2) und
• Übermitteln der Position an die Leitzentrale als Trackingdienst,
**dadurch gekennzeichnet, dass**
über Erfassungsmittel, insbesondere optische Erfassungsmittel (3) in Forme wenigstens einer stereoskopischen Kamera (4) zur Überwachung eines ersten Laderaums (I) des Transportraums und wenigstens eines Lidar-System (5) zur Überwachung eines zweiten Laderaums (II) des Transportraums, und über die Clients (10) auch die Belegung und Auslastung des Transportraums und der nach dem Beladen des Transportraums verbleibende, noch zur Aufnahme weiterer Warensendungen (2) zur Verfügung stehende freie Raum bestimmt wird, wobei über die Leitzentrale oder einen separaten Computer die Information über den zur Verfügung stehenden freien Raum und die geplante Route der Warensendung (2) bereitgestellt wird und in einem Datenspeicher Details von weiteren, im Rahmen des Logistiksystems abzuwickelnden Verkehr von Warensendungen (2) abgespeichert werden, und wobei zur Planung der Bewegungen der Warentransportmittel (1) die Details von weiteren Warensendungen (2), die auch die Größe der Gebinde oder Pakete und die Auslieferungsroute umfassen, vorgehalten werden und der zur Verfügung stehende freie Raum in Anhängigkeit der geplanten Fahrtroute eines Warentransportmittels (1) nach Vergleich der geplanten Route des Warentransportmittels (1) mit weiteren Warensendungen (2) belegt wird, wobei hierzu die Route um Warenaufnahmeort (7) und Warenabladeort (8) der weiteren Warensendungen (2) ergänzt wird und dem Warentransportmittel (1) die Information zur Routenänderung selbständig übermittelt wird.

14. Verfahren nach Anspruch 13, **dadurch gekennzeichnet, dass** in einem Datenspeicher für Warensendungen (2) eine fest vorgegebene Ankunftszeit am Warenabladeort (8) als Sollankunftszeit hinterlegt wird, wobei über die Software die Route des Warentransportmittels (1) berechnet wird und eine Zuladung weiterer Warensendungen (2) nur dann veranlasst wird, wenn nach Überarbeitung einer vom Warentransportmittel (1) anzufahrenden Route, deren Fahrzeiten über ein globales Positionsbestimmungssystem oder ein sonstiges Navigationssystem bestimmt werden, durch Aufnahme weiterer Warensendungen (2) für alle im Transportraum befindlichen Waren die hinterlegten Sollankunftszeiten eingehalten werden können.

15. Verfahren nach einem der beiden vorhergehenden Ansprüche, **dadurch gekennzeichnet, dass** innerhalb des Warentransportmittels (1) Erfassungsmittel (3) angeordnet werden, die mit der Leitzentrale mittelbar oder unmittelbar zu kommunizieren vermögen, wobei die Erfassungsmittel (3) oder mit den Erfassungsmitteln (3) zusammenwirkende Datenverarbeitungsgeräte über eine Push-Funktion erfasste Änderungen signifikanter, von den Erfassungsmitteln (3) überwachter Daten, insbesondere der Position und Größe der in den Transportraum eingebrachten Warensendungen (2), der Leitzentrale selbstständig zur Verfügung stellen oder von der Leitzentrale abgefragt werden und wobei die Erfassungsmittel (3) als optische Erfassungsmittel (3) ausgebildet sind, die über eine Bilderkennung die Größe und die Position der Warensendungen (2), die in den Transportraum verbracht werden, ermitteln und im Rahmen einer Differenzbetrachtung oder über eine unmittelbare Betrachtung des freien Raums den noch zur Verfügung stehenden, freien Raum im Warentransportmittel (1) bestimmen.
